# EUROPEAN PATENT SPECIFICATION

(11) **EP 2 102 089 B1**
(45) Date of publication and mention of the grant of the patent: **21.04.2010**
(21) Application number: 07858080.0
(22) Date of filing: 21.12.2007
(51) Int. Cl.: B66C 13/46, B66C 19/00

(54) **CALIBRATION DEVICE, METHOD AND SYSTEM FOR A CONTAINER CRANE**
KALIBRIERVORRICHTUNG, VERFAHREN UND SYSTEM FÜR EINEN CONTAINERKRAN
DISPOSITIF, PROCÉDÉ ET SYSTÈME D'ÉTALONNAGE POUR UN PORTIQUE À CONTENEUR

(30) Priority: 21.12.2006 SE 0602790
(43) Date of publication of application: 23.09.2009
(73) Proprietor: ABB AB, 721 83 Västerås (SE)
(72) Inventor: BRYFORS, Uno, 722 31 Västerås (SE); HENRIKSSON, Björn, 723 55 Västerås (SE); LINDEBERG, Erik, 723 46 Västerås (SE); STRÅLE, Eric, 722 41 Västerås (SE); ÅBERG, Martin, 113 42 Stockholm (SE); JOHANSSON, Christer, 725 97 Västerås (SE)
(74) Representative: Kock, Ina
(86) International application number: PCT/EP2007/064469
(87) International publication number: WO 2008/074882

(56) References cited:
- EP-A- 1 894 881
- JP-A- 2006 312 521

## Description

### TECHNICAL FIELD.

The invention relates to a device for automatic calibration of a container crane and a method for carrying out such an automatic calibration. The method may involve automatic and/or manual procedures. Such a calibration device is known from JP-A-2006 312521.

### BACKGROUND ART

Container cranes are used to handle freight containers and especially to transfer containers between transport modes at container terminals, freight harbours and the like. Standard shipping containers are used to transport a great and growing volume of freight around the world. Transshipment is a critical function in freight handling. Transshipment may occur at each point of transfer and there is usually a tremendous number of containers that must be unloaded, transferred to a temporary stack, and later loaded on to another ship, back onto the same ship or loaded instead onto another form of transport. Loading and unloading containers to and from a ship takes a great deal of time. The development of automated cranes has improved loading and unloading and made the productivity more predictable, and also eliminated many situations in which port workers have been exposed to danger and injury.

For accurate handling of containers the control systems that regulate the picking up and landing of containers must be calibrated. This may comprise calibrating sub systems of the crane control systems. For example on gantry cranes or ship-to-shore cranes (STS) that run on rails, a somewhat random error that may occur is caused by changes in one or more wheel positions on a gantry rail, which may cause a skew error. Other errors may arise from subsidence in or damage to the area the containers stand upon, so that the position of a landing slot for a container may change. In addition, when optical sensor equipment or position encoder sensors are repaired or moved a re-calibration is necessary.

It is estimated that with today's manual procedures it may take about 4-8 hours per crane to perform a LPS (Load Position Sensor), TPS (Target Position Sensor) and co-calibration. A LPS subsystem finds the position of the load (container or empty spreader) during lifting, handling, and a TPS subsystem finds the position of a target landing place on a ground slot or on a vehicle, as well as mapping positions of other containers, container stacks etc in the vicinity of a target. In addition, depending on how much time is available, an estimated 1-4 hours may be spent on stacking tests and parameter fine-tuning. These are average estimates for a block of containers, which is a given stacking area of eg between two adjacent cranes, when the block has been emptied and taken out of production. If calibration is to be performed on a crane in a block that is in production it often takes more time than that because the procedure is interrupted and has to start over several times. In addition it is often not allowed, on safety grounds, for a maintenance person to work alone in a block of containers.

The error in measurement may come from any of many sources such as: inclination in gantry rail; curves in gantry rail causing skew in crane position; wheel position on gantry rail causing offsets in trolley direction; wheel position on gantry rail causing skew in crane position; gantry positioning error (synchronization offset); twisted trolley girder profile causing error in measurement angle; skew of trolley platform on trolley rail; LPS system calibration error; TPS system calibration error.

Some errors such as TPS system calibration error tend to be constant through a given block of containers. Other errors such as gantry rail inclination and direction depend on gantry position and may thus differ from bay to bay within a given block. Error in gantry inclination also twists the trolley girder, which makes the error different from one row of containers to another in the same block.

### SUMMARY OF THE INVENTION

The aim of the present invention is to provide an improved device, method and system for automatic calibration of the lifting and handling systems of a container crane.

This and other aims are obtained by a method, and a system characterised by the attached independent claims. Advantageous embodiments are described in sub-claims to the above independent claims.

In a first aspect of the invention a calibration device for automatic calibration of a container crane is described, wherein said container crane is controlled by a system comprising at least a first sensor and a second sensor, the device further comprising a calibration rig arranged in a fixed position and comprising a plurality of markers each arranged at a known and fixed position and distance relative to one another.

In an embodiment of the invention a calibration device for automatic calibration of a container crane is described, said device comprising at least a first sensor and a second sensor, and a calibration rig arranged in a fixed position and comprising a plurality of markers each arranged at a known and fixed position and distance relative to one another wherein the calibration rig is arranged in a fixed position in a container yard, freight yard or harbour.

In an embodiment of the invention a calibration device for automatic calibration of a container crane is described, said device comprising at least a first sensor and/or a second sensor, and a calibration rig arranged in a fixed position and comprising a plurality of markers each arranged at a known and fixed position and distance relative to one another wherein the calibration rig is arranged with at least two 2 first markers comprising a surface with a first visual appearance.

In another embodiment of the invention a calibration device for automatic calibration of a container crane is described, said device comprising at least a first sensor and/or? a second sensor, and a calibration rig arranged in a fixed position and comprising a plurality of markers each arranged at a known and fixed position and distance relative to one another wherein the at least two first markers with the first visual appearance are active markers.

In another embodiment of the invention a calibration device for automatic calibration of a container crane is described, said device comprising at least a first sensor and/or a second sensor, and a calibration rig arranged in a fixed position and comprising a plurality of markers each arranged at a known and fixed position and distance relative to one another wherein the calibration rig is arranged with at least two second markers comprising a surface with a second visual appearance.

In another embodiment of the invention a calibration device for automatic calibration of a container crane is described, said device comprising at least a first sensor and/or a second sensor, and a calibration rig arranged in a fixed position and comprising a plurality of markers each arranged at a known and fixed position and distance relative to one another wherein the at least two second markers with the second visual appearance are passive markers.

In an embodiment of the invention a calibration device for automatic calibration of a container crane is described, said device comprising a calibration rig arranged in a fixed position a plurality of markers each arranged at a known and fixed position and distance relative to one another wherein at least two first or active markers comprise an illumination source from any of the group of: IR laser, IR lamp, visible spectra lamp.

In an embodiment of the invention a calibration device for automatic calibration of a container crane is described, said device comprising a calibration rig arranged in a fixed position a plurality of markers each arranged at a known and fixed position and distance relative to one another wherein at least two second or passive markers comprise a substantially planar part bounded by at least one straight edge each arranged at the arranged at a known and fixed position.

In an embodiment of the invention a calibration device for automatic calibration of a container crane is described, said device comprising a calibration rig arranged in a fixed position a plurality of markers each arranged at a known and fixed position and distance relative to one another wherein the least two first or active markers are each arranged attached to a passive marker.

In another embodiment of the invention a calibration device for automatic calibration of a container crane is described, said device comprising a calibration rig arranged in a fixed position a plurality of markers each arranged at a known and fixed position and distance relative to one another wherein at least two first or active markers are arranged in the same known and substantially horizontal plane and separated by a known distance and a third first or active marker is arranged substantially vertically above the first two active markers and separated by a known vertical distance.

In an embodiment of the invention a calibration device for automatic calibration of a container crane is described, wherein said container crane is controlled by a system comprising at least a first sensor and/or a second sensor, the device further comprising a calibration rig arranged in a fixed position and comprising a plurality of markers each arranged at a known and fixed position and distance relative to one another and wherein at least first sensor is part of a load position system of the container crane and said second sensor is part of a target position system of the container crane.

In another aspect of the invention a method for automatic calibration of a container crane is described, wherein said container crane is controlled by a system comprising at least a first sensor and/or a second sensor, and wherein by the actions of moving the crane to a position adjacent a fixed and known calibration device or rig, making an image of a plurality of markers using said at least one first sensor, and by calculating one or more position parameters for at least one control model for controlling the crane relative to a position of a load or a target landing/lifting position.

The primary advantage of the automatic calibration device is that calibration may be carried out automatically with minimum manual intervention. For a basic calibration only a crane operators actions are necessary, and no ground personnel. The automatic process is faster than the known manual methods and saves a lot of valuable time. The time spent calibrating manually has previously involved manpower costs as well as loss of production, estimated to take 4-8 hours per crane.

Previous manual methods also required, depending somewhat on how much time is available, an estimated 1-4 hours to be spent on stacking tests and parameter fine-tuning. The new calibration system takes around five to fifteen minutes depending on which processes are used to turn power to the LPS spreader markers on and off. In addition, the time-saving potential of the automatic calibration may be at least doubled when looking at the manpower costs for calibration because maintenance personnel are usually not allowed to work alone in a block of containers.

Another advantage is that the new automatic calibration gives a consistent accuracy throughout a given block of containers and is the same for all cranes in the block. It depends on the accuracy of the reference markers and is independent of human skill and experience. The new method requires no special skill or experience for performing the normal calibration. Extra manual work that may be needed during commissioning or equipment change is limited to being able to measure trim, list and skew and entering these results into the system, for the LPS.

In another embodiment of the invention a graphic user interface is disclosed which is used to carry out parts of the methods of the invention and which displays the measurements, parameters and validations of the calibrations so determined.

Another object of the present invention is to provide an improved computer program product and a computer readable medium having a program recorded thereon, for automatically calibrating a container crane, said container crane controlled by a control system comprising at least a first sensor (LPS) and/or a second sensor (TPS) to determine a position relative to a freight container handled by a crane.

### BRIEF DESCRIPTION OF THE DRAWINGS

A more complete understanding of the method and system of the present invention may be had by reference to the following detailed description when taken in conjunction with the accompanying drawings wherein:
Figure 1 shows in a simplified schematic diagram a calibration rig for a container crane according to an embodiment of a first aspect of the invention;
Figures 2 and 9 show simplified diagrams of a layout for container stacks and a container crane in a freight terminal or harbour;
Figure 3 shows a simplified diagram of a standard container illustrating axes and directions of movement;
Figures 4 and 5 show flowcharts for a method of carrying out an automatic calibration of the container crane according to an embodiment of second aspect of the invention;
Figure 6 shows schematically an interface for displayed for an operator to select an action of the automatic calibration process according to an embodiment of the invention;
Figures 7-8 shows schematically one or more interfaces for displaying method steps and other information relevant to an embodiment of the invention.

### DESCRIPTION OF THE PREFERRED EMBODIMENTS

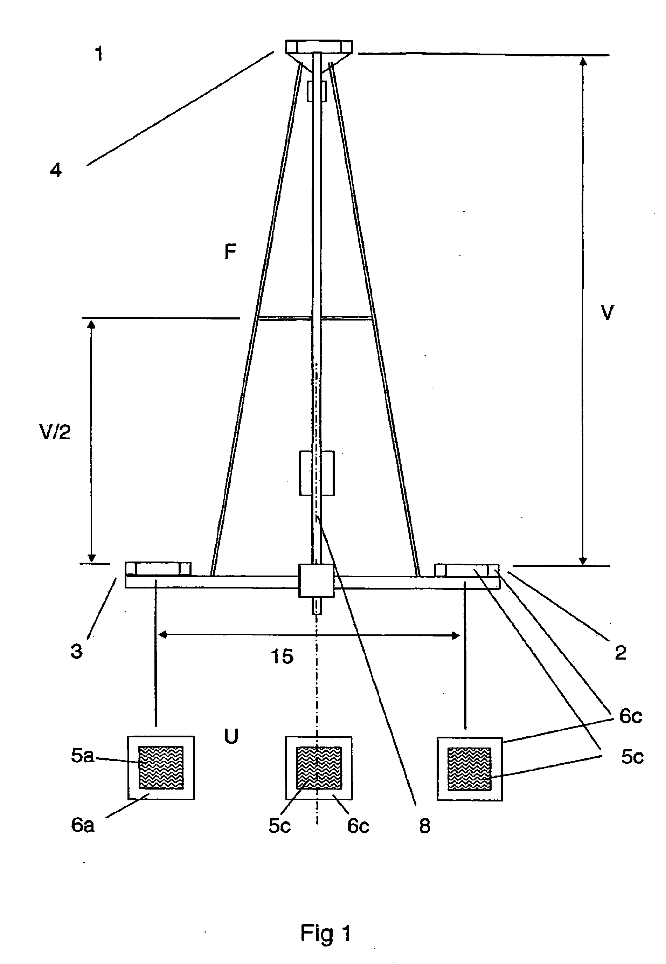

Figure 1 shows a simplified diagram of a calibration rig 1 according to an embodiment of a first aspect of the present invention. The rig is shown as seen from a view F in front, and has markers mounted at three positions 2, 3, 4, which are accurately measured beforehand and the position of each marker is known. Each of the markers in the exemplary embodiment shown comprise a first marker with a first visual appearance, such as an active marker 5a-c which is preferably a light source, and a second marker comprising a second visual appearance which is preferably a passive marker 6a-c. Two marker positions 2, 3 are arranged substantially horizontally at a known and fixed distance D apart. The third position 4 is arranged substantially perpendicularly above the mid point of 2-3 at a substantially vertical distance V. A vertical check means 8 such as a simple plumb line, or a sensor that may be read remotely, may be mounted to provide a ready check that the rig is correctly aligned in the vertical direction. The markers are also shown in the lower part of the diagram in a view U as seen looking down from above the rig. The first or active markers 5a-c are indicated with a cross hatching and are arranged attached to the second or passive markers 6a-c shown as plain rectangular shapes defined by one or more straight edges in this embodiment.

At each marker position 2, 3, 4 a first or active marker 5a-c is arranged together with a second or passive marker 6a-c. The first or active markers may be a light source of some type, such as an IR (Infra Red) diode which is detected during a calibration process by an optical receiver or sensor such as a camera, CCD camera or video camera of the LPS (Load Position System). The passive markers 6a-c comprising a surface with the second visual appearance are detected by a laser scanner of the TPS (Target Position System) which surface and/or one or more edges of the passive markers. The passive marker may, for example, have a substantially rectangular or circular etc. planar shape. By this arrangement of combined targets, the first marker with a first visual appearance, an active marker, and the second marker with the second visual appearance, a passive marker, arranged or attached together, the two sensors of the two control system subsystems can register and be calibrated by both systems to the same position in space in the container yard.

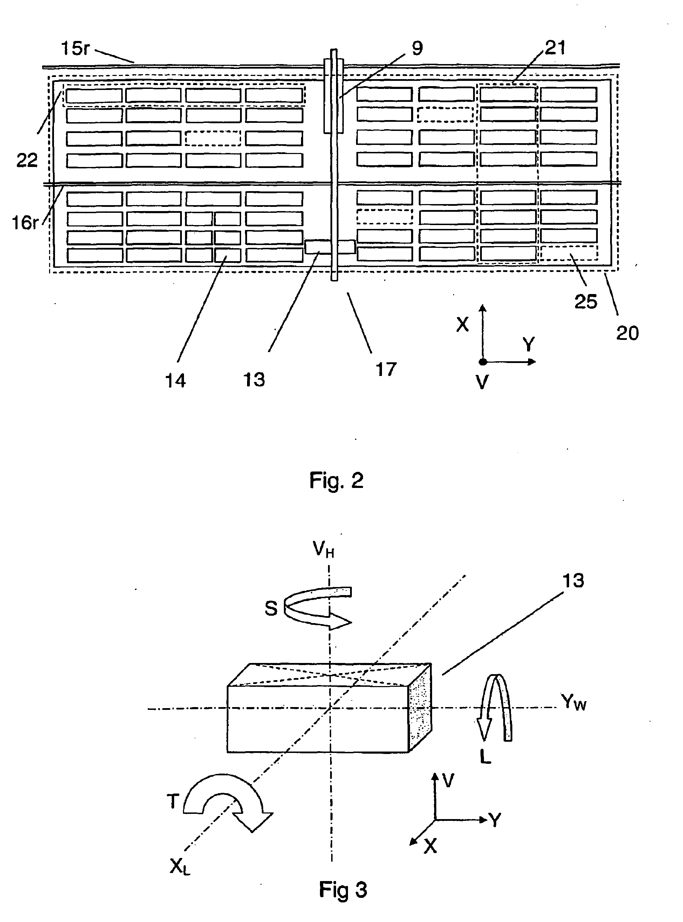

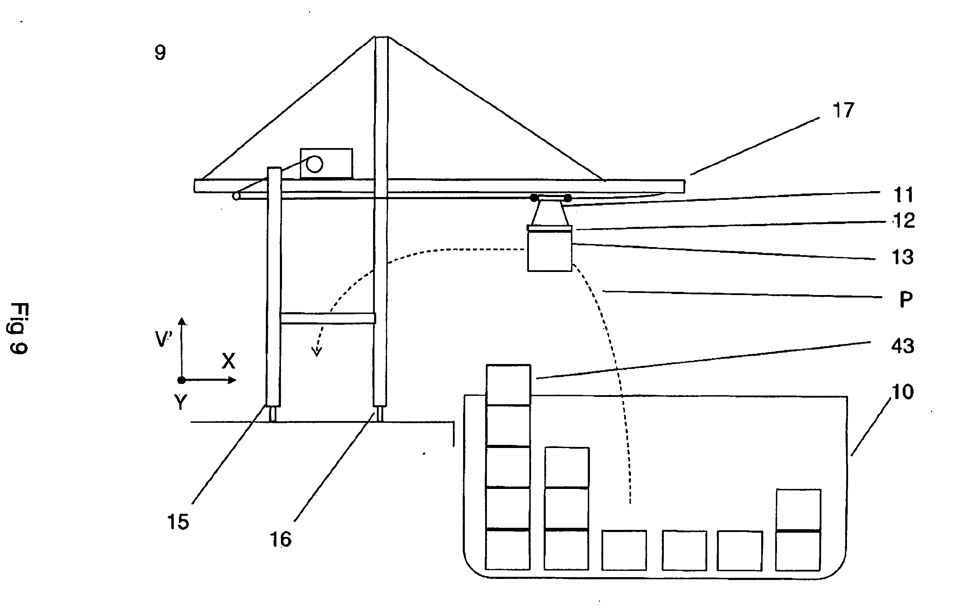

Figure 9 shows a ship 10 and a STS crane 9'. The crane is shown to have a gantry 17 under which runs a trolley 11 forward and back in the X direction. This direction is also known as the gantry direction. The trolley supports a spreader 12 which holds a container 13. The crane lifts the container 13, for example, out of the ship 10 and along a path such as path P to be set down on a container, or a landing place such as a ground slot, or onto a truck or other vehicle (not shown). The crane 9' runs on rails under each set 15, 16 of legs in a direction in or out of the plane of the paper, indicated as a Y direction. This direction is also known as the trolley direction. Figure 2 also shows a layout of containers, cranes and container stacks in a freight terminal or harbour in a view from above the freight yard. Figure 2 shows a block of containers 20 and a container crane 9'. The gantry 17 of the crane is shown supporting a container 13 (see also the container, spreader and trolley in Figure 9). The crane runs on two rails 15r, 16r in the Y or gantry direction. The rectangular block 20 of stacked containers and ground slots 25 is a known but arbitrarily selected group of container stacks around one crane and preferably between two cranes. In this description the group 20 is called a "block" of container stacks and ground slots. Containers may be full size such as 40 foot containers or other sizes such as 20 foot containers 14 arranged in ground slots. The block is also divided into single lines of containers or ground slots in the X direction called bays 21; and into single lines of containers along a direction perpendicular to that which are called rows 22.

Figure 3 shows three principal orthogonal axes X, Y, V with respect to a container 13, and shows three imaginary centre lines for the container with respect to the orthogonal axes.
The figure also shows diagrammatically a skew error S as a rotation about a vertical axis V, a list error L with which a container tends to list around its long axis and rotate about the axis Y, and a trim error T with which one of the ends of the container along the long axis hangs lower than the other end, shown as a rotation about the imaginary centre line axis X.
The calibration processes for TPS and LPS are both absolute (i.e. relative to the yard X-Y-V coordinate system) and thus there is no need for co-calibration between the LPS and the TPS. The result is a high and consistent accuracy throughout the container block 20. Since all cranes in a block are absolute calibrated using the same references their co-stacking capability is improved because any measurement error in the position of the reference targets will have the same effect on all cranes.

With the automatic calibration system there is no need of extensive, time-consuming stacking tests with tweaking or fine tuning of offsets and other adjustment parameters in order to get a satisfactory result.

The system is able to self-diagnose the status (i.e. quality) of its calibration parameter set, using the known positions of the reference targets. An adaptation algorithm is available for automatically adjusting parameters used by the positioning systems in order to handle the possible effect of changes in the environment, such as shifting of the rails etc. This is described in more detail below.

Automatic calibration of the LPS system is carried cut using three LPS reference markers 5a-c at accurately determined positions 2,3,4 in the yard (see Figure 1 for marker positions on the rig). A preferred setup of these markers is to use two lower markers 5a, 5c (at D = approximately 2 metres apart) arranged with a high marker 5b placed above and between the lower ones (at approximately 3.5 metres height V). The choice of detailed setup dimensions may be varied depending on practical issues and algorithm performance. During calibration it is desirable and may be necessary to be able to switch the power on/off to the first or active reference markers 5a-c and to the existing markers (used by the crane control system to register and calculate spreader position) mounted on the spreader 12, if necessary. Preferably this power on/off should be controllable automatically, from the crane or remotely.

The automatic calibration is enabled in part by a model-based LPS system. During production the model is able to determine very accurately the position of the spreader markers. These positions are then used to determine the position of the spreader and bottom of the load (the container 13) as well as the trim, list and skew.

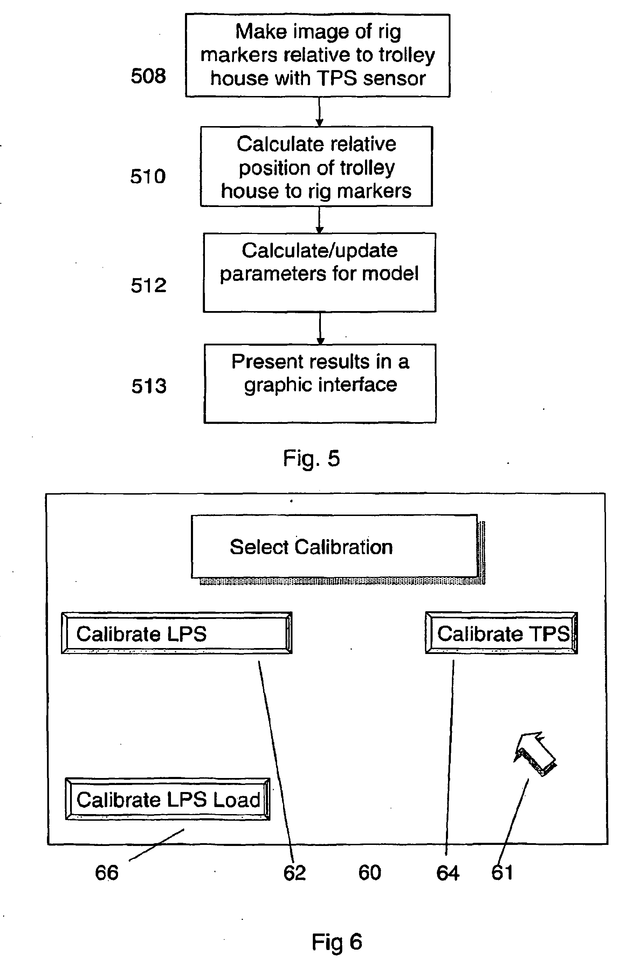

The calibration procedure for the crane operator consists of pressing a "start calibration" button after which the crane moves into position at the reference marker rig, the spreader markers are switched off if necessary and the rig markers 5a-c switched on (see also Calibrate LPS button of Fig 6). The LPS camera on the trolley then detects the rig markers, measurements are made by the camera, model parameters are calculated and the crane returns to the block after restoring power to the spreader markers and switching of the calibration rig markers.

On commissioning, or if any equipment (e.g. marker boxes, IR diode, spreader etc.) is changed, there is a need to establish or re-establish the relation between the spreader and its markers. This is done by lowering the spreader and measuring its trim, list and skew (see diagram of T,L,S in Fig 3). These values are entered into the system where they are compared to the corresponding output from the LPS to create calibration variables compensating for any differences.

It is possible to let the crane return to the reference rig and have the LPS self-diagnose its calibration status. This is done by evaluating the positions of the reference markers which should equal the known, measured, positions of the reference markers.

The resulting accuracy of the calibrated model depends on the accuracy of the first or active marker 5a-c positions. An offset error in their position will lead to an offset error in the camera model and an error in the top marker 5b position will lead to a corresponding inclination error that is linear in height. However, all cranes using the same rig will get the same offsets. During operation the precision of the LPS system is determined by the model errors (which are likely to be very small) and the correctness of the inclination tables (described in more detail below) in addition to the always present, uncontrollable, random errors (such as wheel position on the rail etc.).

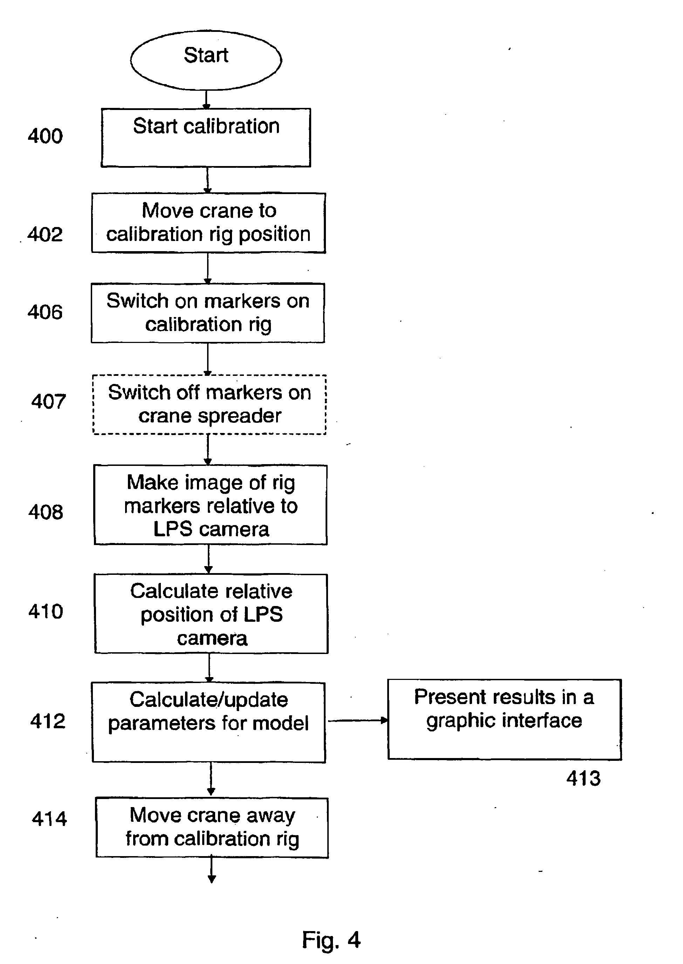

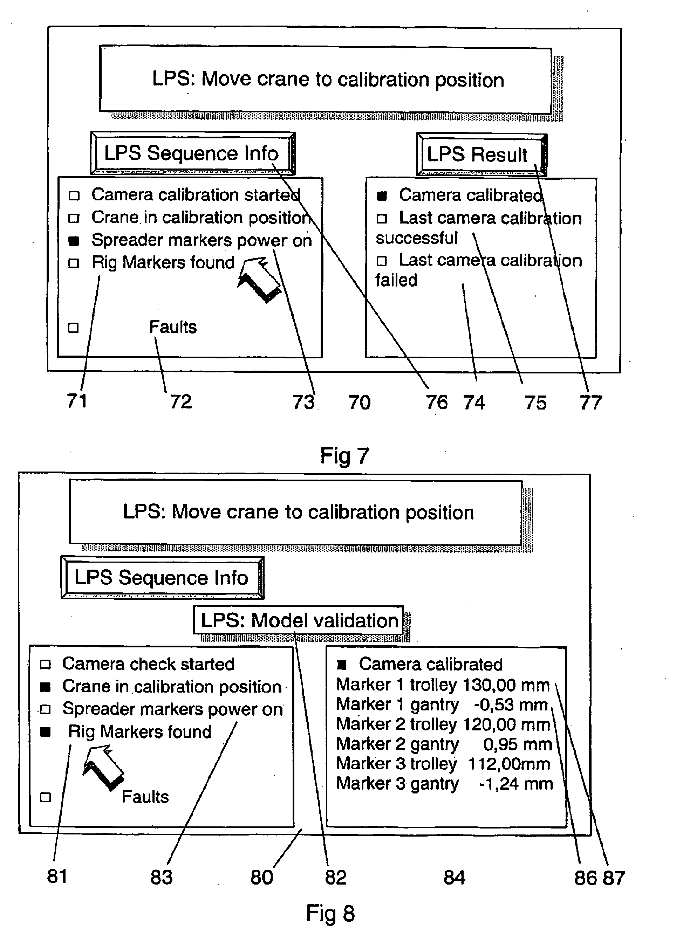

Figure 4 shows a flowchart for a method of carrying out the automatic calibration on, for example, the LPS system, using the calibration rig 1. The figure shows the blocks:
400 start calibration, the operator press a start button (eg Calibrate LPS 62 Fig 6)
402 move crane to calibration rig position, - the crane is moved to be adjacent to the calibration rig, preferably automatically,
406 switch on markers on the rig, the active markers 5a-c are switched on,
407 the markers on the crane spreader are switched off, if that is necessary, so that the sensor system detects the calibration rig and is not affected by the spreader marker light sources,
408 make image of rig markers relative to the trolley with LPS camera, so that the positions of the active rig markers 5a-c are found and measured,
410 calculate relative position of rig markers to trolley, the measured positions of the rig markers extracted from the marker image data are compared to stored values for the marker positions,
412 calculate/update parameters for model, after comparison the model values may be updated from the measured values if the measured values are, upon checking, found to be valid,
413 Present results on a graphic interface 60, 70, 80; see for example items 86, 87 as shown in Fig 8,
   which is then followed by the actions of
   moving crane away from calibration rig, and
   switching off the rig markers, and switching on the spreader markers (if the spreader markers had been switched off in 407).

The LPS calibration calculates the position of the spreader 12 and the actual position of the trolley 11 house (in both gantry and trolley directions). As noted previously, the TPS system is used to detect the position of a Target Landing Position (or lifting position) for a container 13, as well as to measure or map positions for other container stacks etc near to the position of interest. TPS calibration uses the position of the trolley 11 house together with the known positions 2,3,4 (shown in Fig 1) of the calibration rig. The TPS measures the position of the rig markers in a similar way as described above and in relation to Fig 4; and adjusts its calibration parameters until the TPS measured position of the rig corresponds to the actual position of calibration rig and trolley house position. When more than one crane are arranged together both cranes carry out calibrations using the same automatic calibration rig, which will ensure that both cranes will later measure the containers equally in the block. However the TPS system uses the passive markers 6a-c because it has a different sensor, preferably a laser scanner.

The TPS calibration is made in sequence with and following the LPS calibration. When pressing the "start calibration" button the control system will first make an LPS calibration (see Fig 6). After an acknowledgement of a successful LPS calibration the control system then carries out the TPS calibration. The result is presented in the user interface (see partial displays in Figures 7-8). Some additional work is required on commissioning or if equipment is changed (i.e. leveling and skew determination of the TPS).

Figure 5 shows a flowchart for a method of carrying out the automatic calibration on, for example, the TPS system, using the calibration rig 1. The figure shows in addition to the blocks 400-407 of the method of Fig 4 the following blocks:
508 make image of rig markers relative to trolley house with TPS sensor; so that markers 6a-c are detected by trolley sensor or laser scanner,
510 calculate relative position of rig markers to trolley house; similar to 410 image data is processed to extract a position for markers 6a-c,
512 calculate/update parameters for model; the measured positions are validated and compared to stored values, and parameters updated where necessary,
513 Present results on a graphic interface, similar to the examples in Fig 8.

A graphical user interface (GUI) may be used to display one or more of the information or values obtained using the system and methods described above. Figure 6 shows schematically a simplified diagram for a GUI 60 which displays an interface comprising selection means for starting a calibration or automatic calibration of LPS, Calibrate LPS 62, to calibrate a container load, Calibrate Load 66, and to calibrate the TPS system, Calibrate TPS 64. Figure 7 shows a GUI interface 70 displaying in a schematic way information displayed during the LPS calibration process. The figure shows information about stages in the process, LPS Sequence Info 76, which may comprise status indicators such as camera calibration started, crane in calibration position, spreader markers power on 73 (marked positive), rig markers found 71, and Faults. In the figure the process info shows that the spreader markers are still on. LPS Result 77 displays information such as camera calibrated (indicated as completed), last camera calibration successful 76, last camera calibration failed 74.

Figure 8 shows a similar interface 80 displaying an LPS Model Validation 82 result. Among the information determined during the calibration and displayed on this type of interface are status indications for: camera check started, crane in calibration position (indicated as completed) spreader markers on 83, rig markers found 81 (indicated as completed). Thus an operator would understand that the crane has moved over to the rig 402 fig 4, the spreader markers are off 407, and that the rig markers are on 406 and detected. The figure also shows results from a calibration including comparable figures for measurements from the trolley (TPS system)87 and measurements from the gantry 86.

As described above, a Load Position System (LPS) is preferably used to determine, from the trolley position and the spreader position, the instantaneous position of a container in space. However it is also possible to determine the position of the container under the spreader by means of external sensors. In addition, data from a LPS may also be supplemented by data from external sensors.

The measurement system of LPS and TPS may also comprise adaption methods and algorithms in order to minimize errors. A first way to minimize error is for a crane to always pick up a container at the same position as where another crane made the set-down; and in addition within the control system:
- LPS system should report the same position as where TPS measured the container at a pickup of a container, and
- TPS system should measure the ground markers to be in nominal position. Ground markers are markers fixed on the ground which indicate the position of one or more ground slots.

Errors in measurement while handling containers may come from many possible sources:
a) Inclination in gantry rail
b) Curves in gantry rail causing skew in crane position
c) Wheel position on gantry rail causing offsets in trolley direction
d) Wheel position on gantry rail causing skew in crane position
e) Gantry positioning error (synchronization offset)
f) Twisted trolley girder profile causing error in measurement angle
g) Skew of trolley platform on trolley rail
h) LPS calibration error
i) TPS calibration error

Some errors such as (i) TPS calibration error are constant through the block. Other errors such as gantry rail inclination and direction (a) depend on gantry position along the rail and are thus different from bay to bay. Error in gantry inclination also twists the trolley girder, which makes the error different from one lane to another. To take care of the different types of errors the adaptation is made individually for each ground slot but also common for actual bay, actual row and for the whole block, that is, there are four adaptions (for ground slot 25, bay 21, row 22 and block 20 Fig. 2).

There are errors that are stochastic such as wheel position on gantry rail. To reduce the impact of those errors on the adaptation only a small part of the measurement difference (about 5%) is used for adjustment of the system. How much is defined using weight factors, the weight factors are individual for slot, bay, row and block and also individual for the adaptation between cranes, between TPS and LPS and between TPS and ground measurements.

The adaption between LPS/TPS and between the cranes can not detect when inclination in gantry rail cause the stacks not to be erected vertically. The adaptation will make both cranes to stack in the same position but if one crane has a bad unknown inclination, both cranes will make a stack with half that error in inclination. Therefore there is still a need for measuring the inclination of the gantry rail. The inclination will be preset to zero in the position of the calibration rig. The inclination of all other positions will be determined relative to the inclination of this position, and the values stored in an inclination table.

The processing or supervision of the calibration methods may be carried out automatically by one or more or computerised processes without any need for supervision by or actions from an operator. At any time an operator or other authorised person may access the system to display, view, inspect or analyse live data on-line or off line as required.

In another embodiment the first markers have a first visual appearance but are not active markers in the sense of being illumination sources. The first markers may for example be highly reflective for the ambient natural light or for wavelengths associated with illumination by lamps on the spreader (or trolley) and/or wavelengths that are significant for the camera sensors. The second markers are passive markers that have different visual characteristics from the first markers. The surface may be non-reflective to particular wavelengths or highly reflective to selected, but in any case the visual and/or optical characteristics are different to those of the first markers. In its simplest form the first markers have a first visual appearance according to a first colour and the second markers have a second visual appearance according to a second colour. By means of the first and second visual appearance it is clear to the system which set of markers are being detected, registered and/or photographed.

Methods of the invention may be supervised, controlled or carried out by one or more computer programs. One or more microprocessors (or processors or computers) comprise a central processing unit CPU connected to or comprised in one or more of the above described crane control units, which processors, PLCs or computers perform the steps of the methods according to one or more aspects of the invention, as described for example for operating or controlling a system of two industrial handlers and two presses, as described with reference to Figure 4. It is to be understood that the computer programs for carrying out methods according to the invention may also be run on one or more general purpose industrial microprocessors or PLCs or computers instead of one or more specially adapted computers or processors.

The computer program comprises computer program code elements or software code portions that make the computer or processor perform the methods using equations, algorithms, data, stored values, calculations, synchronisations and the like for the methods previously described, and for example in relation to the flowcharts of Figures 4, 5, and/or to the graphic user interfaces of Figures 6, 7, 8. A part of the program may be stored in a processor as above, but also in a ROM, RAM, PROM, EPROM or EEPROM chip or similar memory means. The or some of the programs in part or in whole may also be stored locally (or centrally) on, or in, other suitable computer readable medium such as a magnetic disk, CD-ROM or DVD disk, hard disk, magnetooptical memory storage means, in volatile memory, in flash memory, as firmware, or stored on a data server. Other known and suitable media, including removable memory media such as Sony memory stick (TM), a USB memory stick and other removable flash memories, hard drives etc. may also be used. The program may also in part be supplied or updated from a data network, including a public network such as the Internet.

It should be noted that while the above describes exemplifying embodiments of the invention, there are several variations and modifications which may be made to the disclosed solution without departing from the scope of the present invention as defined in the appended claims.

## Claims

1. A calibration device for automatic calibration of a container crane, said container crane being controlled by a system comprising at least a first sensor (LPS) and/or a second sensor (TPS), **characterised by** a calibration rig (1) arranged in a fixed position (2-4) and comprising a plurality of markers (5a-c, 6a-c), each arranged at a known and fixed position and distance relative to one another.

2. A device according to claim 1, **characterised in that** the calibration rig is arranged in a fixed position in a container yard, freight yard or harbour.

3. A device according to claim 1, **characterised in that** the calibration rig is arranged with at least 2 first markers (5a-c) comprising a surface with a first visual appearance.

4. A device according to claim 1 or 3, **characterised in that** the calibration rig is arranged with at least two second markers (6a-c) comprising a surface with a second visual appearance.

5. A device according to claim 1, **characterised in that** the plurality of markers are arranged such that at least two first or active markers (5a, 5c) are arranged in the same known and substantially horizontal plane and separated by a known distance (D).

6. A device according to claim 1, **characterised in that** the plurality of markers are arranged such that at least two first or active markers (5a-c) are arranged in the same known and substantially vertical plane and separated by a known distance (V).

7. A device according to claim 4, **characterised in that** two first or active markers (5a-c)) comprise an illumination source from any of the group of: IR laser, IR lamp, visible spectra lamp.

8. A device according to claim 1, **characterised in that** at least two first or active markers (5a, 5c) are arranged in the same known and substantially horizontal plane and separated by a known distance (D) and a third first or active marker (5b) is arranged substantially vertically above the first two active markers and separated by a known distance (V).

9. A device according to any of claims 1-8, **characterised in that** said at least first sensor is part of a load position system (LPS) and said second sensor is part of a target position system (TPS).

10. A method for automatic calibration of a container crane, said container crane being controlled by a system comprising at least a first sensor (LPS) and/or a second sensor (TPS), **characterised by** moving the crane (402) to a position adjacent a fixed and known calibration device (1), making an image of a plurality of markers (5a-c, 6a-c) using said at least one first sensor, and calculating one or more position parameters for at least one control model for controlling the crane relative to a position of a load (13) or a target landing/lifting position.

11. A method according to claim 10, **characterised by** making an image of at least two first or active markers (5a-c) comprised in said plurality of markers arranged on the calibration rig.

12. A method according to claim 10, **characterised by** calculating positions of the LPS camera from the image of the at least two first or active markers relative to the spreader (12) position.

13. A method according to claim 10, **characterised by** making an image of at least two second markers with a second visual appearance, or passive markers (6a-c) comprised in said plurality of markers using one second sensor.

14. A method according to claim 12, **characterised by** making one or more images of the TPS passive markers (6a-c) using a distance measuring means or a laser scanner.

15. A method according to claim 12, **characterised by** calculating positions of the trolley house (11) relative to the second or passive markers (6a-c).

16. A method according to claim 12, **characterised by** applying an adaptation to a LPS calibration in respect of an error.

17. A container crane control system for at least one container crane, said system comprising at least a first sensor (LPS) and/or a second sensor (TPS) arranged on said crane, **characterised by** at.least one calibration rig (1) arranged in a fixed position relative the crane and comprising a.plurality of markers (5a-c, 6a-c), each arranged at a known and fixed position and distance relative to one another.

18. A system according to claim 17, **characterised by** a memory storage means comprising a computer program for automatic calibration of a container crane, said container crane being controlled by a system comprising at least a first sensor (LPS) and a second sensor (TPS), said computer program comprising computer code and/or computer software means which, when fed into a computer or processor, will make the processor or computer carry out the method according to claims 10-18.

## Patentansprüche

1. Eine Kalibrierungsvorrichtung für die automatische Kalibrierung eines Containerkrans, wobei der Containerkran von einem System kontrolliert wird, das zumindest einen ersten Sensor (LPS) und/oder einen zweiten Sensor (TPS) umfasst, **gekennzeichnet durch** eine Kalibrierungsanlage (1), die in einer festen Position (2-4) angeordnet ist, und die eine Vielzahl von Markierern (5a-c, 6a-c) umfasst, wobei jeder an einer/einem bekannten und festen Position und Abstand relativ zueinander angeordnet ist.

2. Eine Vorrichtung nach Anspruch 1, **dadurch gekennzeichnet, dass** die Kalibrierungsanlage in einer festen Position in einem Containerdepot, einem Güterbahnhof oder einem Hafen angeordnet ist.

3. Vorrichtung nach Anspruch 1, **dadurch gekennzeichnet, dass** die Kalibrierungsanlage mit zumindest zwei ersten Markierern (5a-c) eingerichtet ist, die eine Oberfläche mit einem ersten visuellen Erscheinungsbild umfassen.

4. Vorrichtung nach Anspruch 1 oder 3, **dadurch gekennzeichnet, dass** die Kalibrierungsanlage mit zumindest zwei zweiten Markierern (6a-c) eingerichtet ist, die eine Oberfläche mit einem zweiten visuellen Erscheinungsbild umfassen.

5. Vorrichtung nach Anspruch 1, **dadurch gekennzeichnet, dass** die Vielzahl von Markierern so angeordnet ist, dass zumindest zwei erste oder aktive Markierer (5a, 5c) in der gleichen bekannten und im Wesentlichen horizontalen Ebene angeordnet und durch einen bekannten Abstand (D) getrennt sind.

6. Vorrichtung nach Anspruch 1, **dadurch gekennzeichnet, dass** die Vielzahl von Markierern so angeordnet ist, dass zumindest zwei erste oder aktive Markierer (5a-c) in der gleichen bekannten und im Wesentlichen vertikalen Ebene angeordnet und durch einen bekannten Abstand (V) getrennt sind.

7. Vorrichtung nach Anspruch 4, **dadurch gekennzeichnet, dass** zwei erste oder aktive Markierer (5a-c) eine Beleuchtungsquelle umfassen, wobei die Beleuchtungsquelle irgendeines der Gruppe ist: IR Laser, IR Lampe, Lampe mit sichtbarem Spektrum.

8. Vorrichtung nach Anspruch 1, **dadurch gekennzeichnet, dass** zumindest zwei erste oder aktive Markierer (5a, 5c) in derselben bekannten und im Wesentlichen horizontalen Ebene angeordnet und durch einen bekannten Abstand (D) getrennt sind, und dass ein dritter erster oder aktiver Markierer (5b) im Wesentlichen vertikal über den ersten zwei aktiven Markierern angeordnet und durch einen bekannten Abstand (V) getrennt ist.

9. Vorrichtung nach einem der Ansprüche 1 bis 8, **dadurch gekennzeichnet, dass** der zumindest erste Sensor Teil eines Lastpositionssystems (LPS) ist und der zweite Sensor Teil eines Zielpositionssystems (TPS) ist.

10. Ein Verfahren für die automatische Kalibrierung eines Containerkrans, wobei der Containerkran von einem System kontrolliert wird, das zumindest einen ersten Sensor (LPS) und/oder einen zweiten Sensor (TPS) umfasst, **gekennzeichnet durch** Bewegen des Krans (402) zu einer Position, die sich neben einer festen und bekannten Kalibrierungsvorrichtung (1) befindet, Anfertigen eines Bildes von einer Vielzahl von Markierern (5a-c, 6a-c) unter Verwendung des zumindest einen ersten Sensors, und Berechnen eines oder mehrerer Positionsparameter für zumindest ein Kontrollmodell zum Kontrollieren des Krans relativ zu einer Position einer Last (13) oder einer Ablegen-/Anheben-Zielposition.

11. Verfahren nach Anspruch 10, **gekennzeichnet durch** Anfertigen eines Bildes von zumindest zwei ersten oder aktiven Markierern (5a-c), die in der Vielzahl von Markierern umfasst sind, die auf der Kalibrierungsanlage angeordnet sind.

12. Verfahren nach Anspruch 10, **gekennzeichnet durch** Berechnen von Positionen der LPS Kamera von dem Bild von den zumindest zwei ersten oder aktiven Markierern relativ zu der Verteilerposition (12).

13. Verfahren nach Anspruch 10, **gekennzeichnet durch** Anfertigen eines Bildes von zumindest zwei zweiten Markierern mit einem zweiten visuellen Erscheinungsbild, oder passiven Markierern (6a-c), die in der Vielzahl von Markierern umfasst sind, unter Verwendung eines zweiten Sensors.

14. Verfahren nach Anspruch 12, **gekennzeichnet durch** Anfertigen eines oder mehrerer Bilder der TPS passiven Markierer (6a-c) unter Verwendung eines Abstandmessmittels oder eines Laserscanners.

15. Verfahren nach Anspruch 12, **gekennzeichnet durch** Berechnen von Positionen des Wagenhauses (11) relativ zu den zweiten oder passiven Markierern (6a-c).

16. Verfahren nach Anspruch 12, **gekennzeichnet durch** Anwenden einer Adaption an eine LPS Kalibrierung in Bezug auf einen Fehler.

17. Ein Containerkrankontrollsystem für zumindest einen Containerkran, wobei das System zumindest einen ersten Sensor (LPS) und/oder einen zweiten Sensor (TPS) umfasst, die auf dem Kran angeordnet sind, **gekennzeichnet durch** zumindest eine Kalibrierungsanlage (1), die in einer festen Position relativ zu dem Kran angeordnet ist und die eine Vielzahl von Markierern (5a-c, 6a-c) umfasst, wobei jeder an einer/einem bekannten und festen Position und Abstand relativ zueinander angeordnet ist.

18. Ein System nach Anspruch 17, **gekennzeichnet durch** ein Datenspeichermittel, das ein Computerprogramm für die automatische Kalibrierung eines Containerkrans umfasst, wobei der Containerkran von einem System kontrolliert wird, das zumindest einen ersten Sensor (LPS) und einen zweiten Sensor (TPS) umfasst, wobei das Computerprogramm Computercode und/oder Computersoftwaremittel umfasst, welche, wenn sie in einen Computer oder Prozessor eingeführt werden, den Prozessor oder Computer veranlassen, das Verfahren nach den Ansprüchen 10 bis 18 auszuführen.

## Revendications

1. Dispositif d'étalonnage pour l'étalonnage automatique d'une grue à conteneurs, ladite grue à conteneurs étant commandée par un système comprenant au moins un premier capteur (LPS) et/ou un deuxième capteur (TPS), **caractérisé par** un portique d'étalonnage (1) placé dans une position fixe (2-4) et comprenant une pluralité de repères (5a-c, 6a-c), tous placés en une position et à une distance connues et fixes les uns par rapport aux autres.

2. Dispositif selon la revendication 1, **caractérisé en ce que** le portique d'étalonnage est placé dans une position fixe dans un terminal à conteneurs, un terminal de fret ou un port.

3. Dispositif selon la revendication 1, **caractérisé en ce que** le portique d'étalonnage est disposé avec au moins deux premiers repères (5a-c) comprenant une surface ayant une première apparence visuelle.

4. Dispositif selon la revendication 1 ou 3, **caractérisé en ce que** le portique d'étalonnage est disposé avec au moins deux deuxièmes repères (6a-c) comprenant une surface ayant une deuxième apparence visuelle.

5. Dispositif selon la revendication 1, **caractérisé en ce que** les repères sont agencés de telle manière que au moins deux premiers repères ou repères actifs (5a, 5c) sont disposés dans le même plan connu sensiblement horizontal et séparés par une distance connue (D).

6. Dispositif selon la revendication 1, **caractérisé en ce que** les repères sont agencés de telle manière que au moins deux premiers repères ou repères actifs (5a-c) sont disposés dans le même plan connu sensiblement vertical et séparés par une distance connue (V).

7. Dispositif selon la revendication 4, **caractérisé en ce que** deux premiers repères ou repères actifs (5a-c) comprennent une source d'éclairage quelconque choisie dans le groupe comprenant les lasers à infrarouge, les lampes à infrarouge et les lampes dans le spectre visible.

8. Dispositif selon la revendication 1, **caractérisé en ce que** au moins deux premiers repères ou repères actifs (5a, 5c) sont disposés dans le même plan connu sensiblement horizontal et séparés par une distance connue (D) et un troisième premier repère ou repère actif (5b) est placé sensiblement verticalement au-dessus des deux premiers repères actifs et séparé par une distance connue (V).

9. Dispositif selon l'une quelconque des revendications 1 à 8, **caractérisé en ce que** ledit au moins premier capteur fait partie d'un système de position de charge (LPS) et ledit deuxième capteur fait partie d'un système de position de cible (TPS).

10. Procédé d'étalonnage automatique d'une grue à conteneurs, ladite grue à conteneurs étant commandée par un système comprenant au moins un premier capteur (LPS) et/ou un deuxième capteur (TPS), **caractérisé par** le fait de déplacer la grue (402) jusqu'à une position adjacente à un dispositif d'étalonnage fixe et connu (1), de prendre une image d'une pluralité de repères (5a-c, 6a-c) en utilisant ledit au moins un premier capteur, et de calculer un ou plusieurs paramètres de position pour au moins un modèle de commande pour commander la grue par rapport à une position d'une charge (13) ou une position de pose/levage cible.

11. Procédé selon la revendication 10, **caractérisé par** le fait de prendre une image d'au moins deux premiers repères ou repères actifs (5a-c) compris dans la pluralité de repères placés sur le portique d'étalonnage.

12. Procédé selon la revendication 10, **caractérisé par** le fait de calculer les positions de la caméra LPS à partir de l'image desdits au moins deux premiers repères ou repères actifs par rapport à la position du palonnier (12).

13. Procédé selon la revendication 10, **caractérisé par** le fait de prendre une image d'au moins deux deuxièmes repères ayant une deuxième apparence visuelle, ou repères passifs (6a-c) compris dans ladite pluralité de repères en utilisant un deuxième capteur.

14. Procédé selon la revendication 12, **caractérisé par** le fait de prendre une ou plusieurs images des repères passifs TPS (6a-c) en utilisant un moyen de mesure de distance ou un lecteur de codes à barres laser.

15. Procédé selon la revendication 12, **caractérisé par** le fait de calculer les positions du chariot (11) par rapport aux deuxième repères ou repères passifs (6a-c).

16. Procédé selon la revendication 12, **caractérisé par** le fait d'appliquer une adaptation à un étalonnage LPS relativement à une erreur.

17. Système de commande de grue à conteneurs pour au moins une grue à conteneurs, ledit système comprenant au moins un premier capteur (LPS) et/ou un deuxième capteur (TPS) placés sur ladite grue, **caractérisé par** au moins un portique d'étalonnage (1) placé dans une position fixe par rapport à la grue et comprenant une pluralité de repères (5a-c, 6a-c), tous placés en une position et à une distance connues et fixes les uns par rapport aux autres.

18. Système selon la revendication 17, **caractérisé par** un moyen de stockage à mémoire comprenant un programme informatique pour l'étalonnage automatique d'une grue à conteneurs, ladite grue à conteneurs étant commandée par un système comprenant au moins un premier capteur (LPS) et un deuxième capteur (TPS), ledit programme informatique comprenant du code informatique et/ou un moyen logiciel informatique qui, lorsqu'il est chargé dans un ordinateur ou un processeur, fait exécuter par le processeur ou l'ordinateur le procédé des revendications 10 à 18.
